# EUROPEAN PATENT SPECIFICATION

(11) **EP 1 268 708 B1**
(45) Date of publication and mention of the grant of the patent: **05.10.2005**
(21) Application number: 00927853.2
(22) Date of filing: 20.04.2000
(51) Int. Cl.: C10G 1/10

(54) **METHOD AND SYSTEM FOR CONTINUOUSLY PREPARING GASOLINE, KEROSENE AND DIESEL OIL FROM WASTE PLASTICS**
VERFAHREN UND SYSTEM ZUR KONTINUIERLICHEN HERSTELLUNG VON BENZIN, KEROSIN UND DIESELÖL AUS KUNSTSTOFFABFÄLLEN
PROCEDE ET SYSTEME PERMETTANT DE PREPARER EN CONTINU DE L'ESSENCE, DU KEROSENE ET DU GAZOLE A PARTIR DE DECHETS PLASTIQUES

(30) Priority: 20.03.2000 KR 2000014033
(43) Date of publication of application: 02.01.2003
(73) Proprietor: Kwak, Ho-jun, Kyungsangnam-do 641-100 (KR)
(72) Inventor: Kwak, Ho-jun, Kyungsangnam-do 641-100 (KR)
(74) Representative: Copsey, Timothy Graham
(86) International application number: PCT/KR2000/000373
(87) International publication number: WO 2001/070906

(56) References cited:
- EP-A1- 0 675 189
- CN-A- 1 123 822
- JP-A- 10 251 656

## Description

### Technical Field

The present invention relates in general to a method and system for the continuous preparation of gasoline, kerosene and diesel oil from waste plastics. More particularly, the present invention relates to a method and system for the continuous preparation of gasoline, kerosene and diesel oil, which comprises dehydrogenating and decomposing waste plastics, and then subjecting the resulting waste plastics to a fluid catalytic cracking, and which is particularly suitable for application in a small scale facility. The present invention allows a gasoline-based fraction to be obtained in high fraction, and also has advantages, particularly in the view of environmental protection and resource reclamation.

### Background Art

Recently, the reclamation of waste plastics is of great interest throughout the world in the view of environmental protection and energy reclamation, and is studied in a variety of manners. As one field of such a waste plastic reclamation, the recovery of fuels from waste plastics is recognized. JP-A-10 251656 discloses a method for producing oil from waste plastic using catalysed thermal decomposition.

The conventional methods for the recovery of fuels from waste plastics mostly enable the production of kerosene, diesel oil and/or a mixture thereof. However, due to technical problems associated with a process and equipment, such as a pre-treatment of the waste plastic raw material, a cracking, a fractionation, and a refining, etc., there is no report for the production of gasoline, in particular for automobiles, using the waste plastics with the exception of CN-A-1123822, which considers the application of a catalytic cracking step followed by distillation, to waste products.

Gasoline generally designates volatile, combustible liquid hydrocarbons obtained by the reforming distillation, polymerization, catalytic cracking, and alkylation, etc. of crude oil. In most countries, octane number, distillation property, and allowable contents of harmful substances, such as lead or sulfur components, for gasoline, are provided under the law. In particular, the octane number and the distillation property are the most important quality standards of a fuel for an automobile internal combustion engine. Gasoline produced in an oil refinary conforms to the quality standards provided under the law, by combining a low- or high-boiling fraction of a low or high octane number to a mixed product of a product from a Fluid Catalyst Cracking Unit (FCCU) and a product resulted from the reforming of a high-boiling fraction from the hydrocracking of naphtha produced in the atmospheric distillation of crude oil. For this reason, the use of waste plastic for production of gasoline is difficult to meet with the quality standards.

Waste plastics, that are polymers of a high molecular weight, have a problem in that, upon a simple thermal decomposition, they produce mainly a wax fraction, with little or no production of gasoline, kerosene, and light oil, due to a decomposition property thereof.

Therefore, as solutions for the above problem, there are proposed thermal decomposition methods using a solid acid as a catalyst. A drawback with these methods is, however, that C₁ to C₃ waste gases, and a mixed oil fraction of C₈ to C₂₅ kerosene and diesel oil are mainly produced, while an oil fraction of 4 to 25 carbon atoms which is main component is not produced in a good yield. As a result, the reclamation of waste plastic is limited only to the mixed oil.

In addition to this drawback, the above thermal decomposition method has another problem in that coke and polymeric materials, that are formed during the catalytic cracking of waste plastic melt, directly form a barrier to a catalyst surface, such that a serious catalytic poison phenomenon occurs, thereby reducing rapidly the catalyst activity. For this reason, a method is used in which a simply thermally decomposed gaseous oil is partially cracked and isomerized by passing the gaseous oil through a fixed bed reactor filled with a catalyst. However, this method has a problem in that, since.the temperature in the fixed bed is lower than that in the thermal decomposition, a reaction conversion is seriously limited. Moreover, in this method, the regeneration and the replacement of the catalyst due to the catalytic poison phenomenon require significant cost, and are also very complicated. Owing to these disadvantages, this method is limited in its application to the commercial facility. Additionally, this method is relatively low in production of gasoline oil fraction, and thus was not believed to be suitable for the production of gasoline.

### Disclosure of the Invention

It is a first object of the present invention to provide a method for continuously preparing gasoline, kerosene, and diesel oil from waste plastics, which is capable of preparing a gasoline-based fraction of a good quality at a high fraction.

It is a second object of the present invention to provide a method for continuously preparing gasoline, kerosene and diesel oil, which can contribute to environmental protection due to an efficient reclamation of waste plastics.

It is a third object of the present invention to provide a system for continuously preparing gasoline, kerosene, and diesel oil, according to the first and second objects as described above.

According to one preferred aspect for accomplishing the first object of the present invention, there is provided a method for the continuous preparation of gasoline, kerosene, and diesel oil, comprising the steps of: subjecting waste plastics to a first catalytic reaction to be dehydrogenate while being decomposed; subjecting the dehydrogenated and decomposed waste plastic melt to a fluid catalytic cracking to produce a gasoline-based fraction at a high fraction; and fractionating the resulting material into the gasoline-based fraction, kerosene fraction, and diesel oil fraction.

According to another preferred aspect for accomplishing the second object of the present invention, there is provided a method for the continuous preparation of gasoline, kerosene, and diesel oil, which further comprises the step of reforming the gasoline-based oil fraction, after the fractionating step mentioned in the above aspect for accomplishing the first and second objects.

According to another preferred aspect for accomplishing the above first and second objects, there is provided a method for the continuous preparation of gasoline, kerosene, and diesel oil, which further comprises the steps of: after the reforming step, subjecting the reformed gasoline-based fraction to a low-pressure gas separation; refining the kerosene and diesel oil fractions from the fractionating step, and the reformed gasoline-based fraction from the low-pressure gas separation step, respectively; and adding at least one additive to the refined gasoline-based oil fraction depending on instrumental analysis results thereof, such that the resulting gasoline-based fraction has an octane number and distillation property meeting the law.

According to another preferred aspect for accomplishing the above third object of the present invention, there is provided a system for continuously preparing gasoline, kerosene, and diesel oil from waste plastics, which comprises: a fluid bed catalytic cracker, in which a waste plastic melt and an alumina silicate solid acid catalyst particles are introduced downwardly, and cracked and isomerized, and into which steam generated from a steam injector is injected through its lower portion to vaporize non-vaporized gaseous oil present on the catalyst surface, and also which is communicated with a fractionating column via a pressure controlling means at its upper portion; a cyclone disposed outside of the fluid catalytic column and serving to sort only the catalyst particle of a desired size among the catalyst particles dropped to the lower portion; a nickel-molybdenum catalyst regenerator including an air injector and an exhaust gas pressure controller, and serving to regenerate the catalyst transferred from the cyclone, and to return the regenerated catalyst to the fluid catalytic cracker; and
a reactor serving to bring the waste plastic melt into contact with a nickel or nickel catalyst impeller to dehydrogenate while decomposing the waste plastic melt, the reactor being communicated with the fluid catalytic cracker and the catalyst regenerator.

According to another preferred aspect for accomplishing the third object of the present invention, there is provided a system for continuously preparing gasoline, kerosene, and diesel oil, which, additionally to the elements mentioned in the just above system, further comprises a storage tank for a reforming super acid catalyst; a first super mixer serving to mix the gasoline-based fraction with the reforming catalyst; and a reforming reactor.

### Brief Description of the Drawings

Other objects and aspects of the invention will be apparent from the following description of embodiments with reference to the accompanying drawings, in which:
Fig. 1 is a flow chart schematically showing a continuous method according to the present invention; and
Fig. 2 schematically shows a system according to the present invention.

### Best Mode for Carrying Out the Invention

The system according to the present invention adopts a continuous preparation manner, and has the constructional elements as follows:
First, a pre-treating and melting device of waste plastic raw material, and optionally, an impurity-removing device.
Second, a first reactor serving to dehydrogenate while decomposing the waste plastic melt.
Third, a second reactor serving to subject the dehydrogenated and decomposed waste plastic melt to a fluid catalytic cracking, thereby to produce a gasoline-based fraction at a relatively high fraction, a kerosene fraction, and a diesel oil fraction.
Fourth, an Aspen fractionation column which can optionally included and has a process fluctuation-attentuating function for the efficient and exact separation.
Fifth, a third reactor serving to reform the gasoline-based fraction to be converted into a high octane gasoline-based fraction.
Sixth, a precipitation-separation tank which is optionally included and serves to remove a variety of additives contained in the gasoline-based fraction, the kerosene oil fraction and the diesel oil fraction, respectively, such that the additive contents are below a normal value provided under the law.
Seventh, a blender that is optionally included and serves to provide a gasoline meeting with the provisions under the law, by batchwise or continuously conducting the instrumental analysis of the gasoline-based fraction, and then by blending the oil fraction with a blend stock according to the obtained analysis result, to meet the octane number and distillation property of the oil fraction with the normal value provided under the law.

The continuous method for the preparation of gasoline, kerosene, and diesel oil from waste plastics, according to the present invention, is advantageous in that the kerosene and diesel oil fractions, that were resulted from the fractionation of the catalytically cracked gaseous oil in the fractionating column, are rich in isomerized fraction, as they were already reformed to a significant level in the fluid catalytic cracking step. For this reason, the kerosene and diesel fractions are decreased in freezing point and thus are not problematic in the transfer and storage in the winter season or a cold region having a relatively high frequency of use. In addition, they meet with the quality standard of fuels.

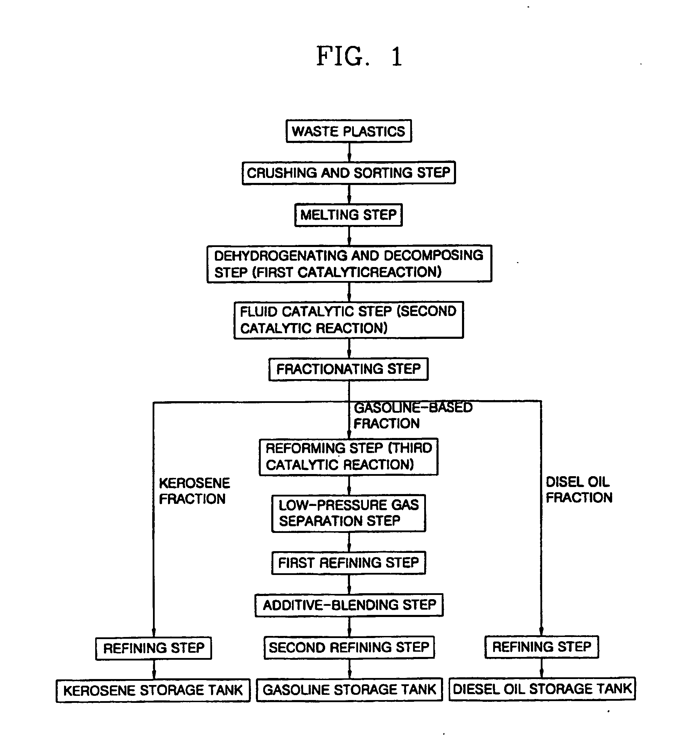

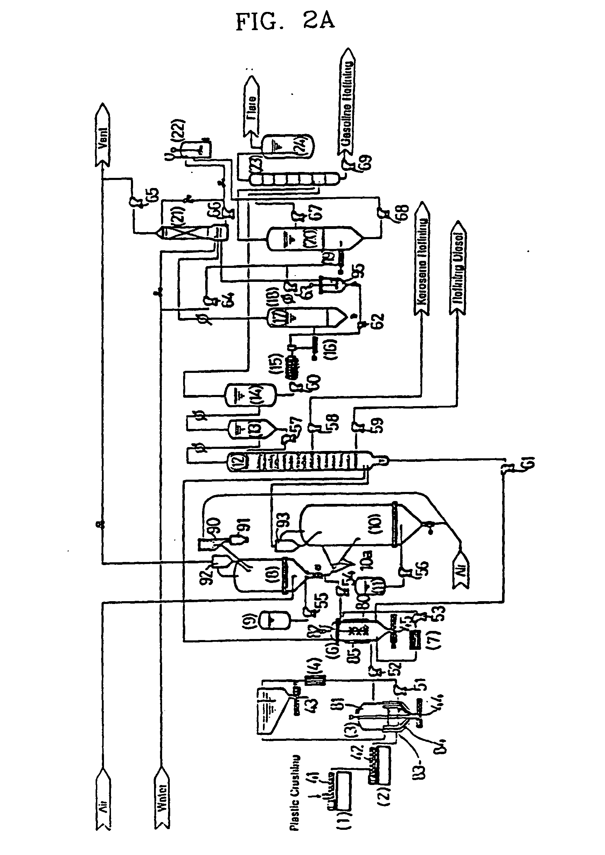

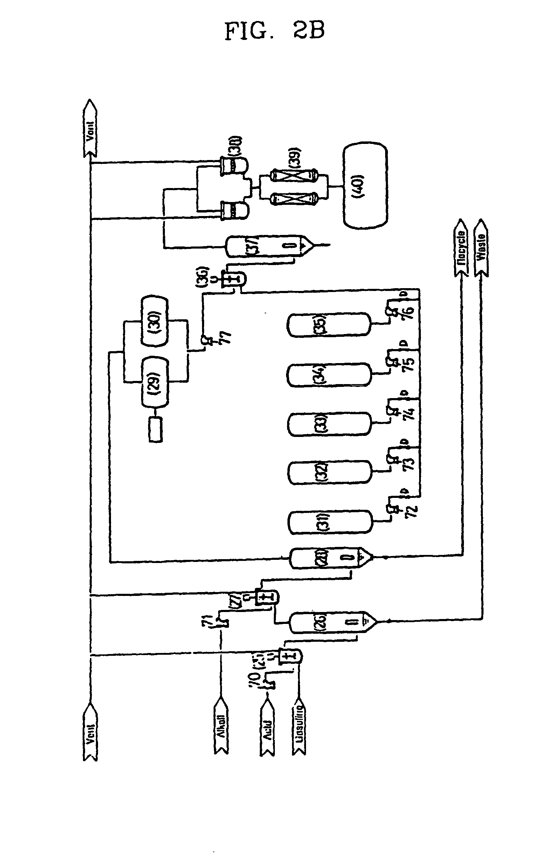

The present invention will now be described in detail with reference to the accompanying drawings. For convenience of description, the reference to Fig.1 will be made together with the reference to Fig. 2.

Fig. 1 is a flow chart schematically showing a method for the continuous preparation of gasoline, kerosene and diesel oil according to an embodiment of the present invention, and Fig. 2 is a drawing schematically showing a system of the present invention. The description referring to the drawings will now be made in processing step order.

First, a pretreatment is carried out which consists of a crushing and sorting step, a melting step and an impurity-precipitating step. In the crushing and sorting step, collected waste plastics are crushed into a chip size for easiness of the transfer and melting, and impurities are sorted out and removed. The size of the crushed waste plastics is not critical to the present invention. The crushing rate of the waste plastics may be, for example, about 1000 kg waste plastics/hr, but it is, of course, varied depending on the scale of the crushing facility.

Meanwhile, the term "waste plastics" as used herein collectively mean natural and synthetic resins. The waste plastics preferably designate thermoplastics, but do not exclude thermosetting resins. More preferably, the waste plastics include, but are not limited to, polyethylene, polypropylene, and polystyrene, etc.

Subsequently, in a melting step, the crushed waste plastics are transferred by a screw feeder 41 into raw material-melting devices 1 and 2 wherein the crushed and sorted waste plastics are melted. In an embodiment shown in Fig.2, the waste plastic melt is stirred with a rotor 83 rotating with a motor 81 in a first melting device, while firstly melting the waste plastic chips. Then, the melt is dewatered to have a water content of about 10% or less, followed by elevating to 150 °C. After this, the melt is introduced into a second melting device 2 with a screw feeder 42, and further elevated to a temperature of about 340 to 360 °C to be secondly melted therein. The secondly melted waste plastics are introduced into a raw material melting tank 3. Earth and fine impurities, etc., that are precipitated on the bottom of the raw material melting tank, are eliminated from the system using a discharge screw 44.

The waste plastic melt is melted,in the melting tank 3 such that it is completely homogeneous. In the impurity-precipitating step, the homogeneous waste plastic mixture is entered into a precipitating tank 5 by a rotary pump 51, which tank 5 is maintained at a temperature of about 340 °C to 360 °C and is slanted at its bottom. In the precipitating tank 5, earth and fine impurities, etc. are precipitated and removed. Meanwhile, the waste plastic melt being transferred with the rotary pump 51 is maintained at about 350 °C by compensating for lost heat with a heat from a first external circulating heater 4. If crushing rate of the waste plastics is, for example, as described above, the transfer rate of the melt is, for example, about 5,000 liter/minute (LPM), but it can be also varied. Earth and fine impurities precipitated on the bottom of the precipitating tank 4 are eliminated with a discharge screw 43 from the system. The precipitating tank 5 may also be equipped with a heater (not shown).

Next, a dehydrogenating and decomposing step (a first catalytic reaction step) is carried out. In this step, the waste plastic melt, from which the impurities were removed by the above pretreatment step, is introduced into a first reactor at a constant flow rate (about 15 to 18 LPM for the above described crushing rate) through a metering pump 52. The introduced waste plastic melt is brought into contact with a catalyst impeller 86 rotating with a motor 82 (preferably an impeller made of nickel or nickel alloy) at a temperature of 350 °C to 370 °C, thereby being dehydrogenated and decomposed. Also, it is preferred in view of reactivity and output to control impeller rpm/impeller/flow rate (for example, 180 rpm/8-blades-4 stage disk turbine/5 cm/min upward flow, for the above crushing rate), such that the reaction segment for flow rate is below 10 to 20 µm. The residence time of the raw material in the first reactor is in the range of about 20 to 35 minutes.

In particular, the impeller has preferably a multiple stage turbine blade type such that the waste plastic raw material flow is maintained at a plug flow. A baffle and a disc hole advantageously act as assistants for the maintenance of the plug flow.

The nickel alloy catalyst conducts the dehydrogenation of the polymer at a high temperature, such as about 350 °C to 370 °C, and the cracking of the polymer at its weak points, simultaneously. In this step, as thermal cracking or catalytic cracking does not still in earnest occur, there occurs no catalytic poison problem by the formation of a barrier on the catalyst surface.

By this dehydrogenation and decomposition step, the raw material is reduced in molecular weight to a level of 1/8 to 1/12.

Supply of heat to the first reactor is carried out by an operation of a pump 53 with a second external-circulating heater 7. A heater 85 may also be installed outside of the first reactor 6.

Subsequently, the waste plastic melt raw material, which was passed through the first catalytic reaction, i.e., the dehydrogenation and decomposition step, is subjected to a fluid catalytic cracking. The raw material being transferred by a high pressure pump 54 is intensively reacted with a catalyst introduced from a catalyst regenerator 8, in a narrow space inside of a fluid catalytic cracking pipe 10a, whose temperature is maintained at 500 °C to 550 °C. While reacting as such, the raw material is introduced into the fluid bed catalytic cracker 10 (a second reactor) at a pressure of 10 kg/cm² and a flow rate of about 15 to 18 LPH (for the above crushing rate). The reaction of the raw material is completed in the fluid catalytic cracker 10, while the catalyst is dropped downwardly to the bottom of the fluid catalytic cracker. In this reaction, the raw material is instantly cracked upon contact with the catalyst, and then expanded by about 18 times in volume. Simultaneously with this expansion, it is rapidly diffused into pores of the catalyst to be further cracked and isomerized.

As the catalyst used in the above reaction, the conventional alumina silica (SiO₂-Al₂O₃) solid acid catalyst is preferred, but is not limited thereto. The low molecular weight gas, which was cracked at a temperature of about 500 °C to 550 °C, is in contact with the wide pore face inside of the catalyst, while being reformed and aromatized by the second reaction.

The time, during which the raw material is passed through the fluid catalytic reactor, is determined depending on the diffusion velocity. Moreover, it is preferred that the catalyst is introduced downwardly from the upper portion, because it results in a significant reduction in equipment cost, and at the same time, is advantageous in making equipment smaller in size.

The catalyst and the gaseous oil, that were passed through the fluid bed, are separated from each other in the second reactor 10. In so doing, it is preferred to control the heat balance and the material balance, such that 90% or more of the raw material is finally cracked. Such a control will be obvious to a person skilled in the art.

The portion of gaseous oil, which is not removed from the surface of the catalyst, is vaporized with the vaporization of steam produced from a steam generator 11 and supplied to the lower portion of the second reactor 10 at a molar ratio of 14%. As a result, less than 10% of the gaseous oil remains non-vaporized.

At a location spaced upwardly apart from the upper portion of the fluid catalytic cracker 10, as the second reactor, there is disposed an exhaust gas pressure-controlling means 93. This pressure-controlling means serves to maintain always the pressure of the cracker 10 at a level higher than that of a lower portion (a portion communicated with the cracker) of a fractionating column 10, thereby preventing a countercurrent flow from the fractionating column 10.

At a location spaced apart from the lower portion of the fluid catalytic cracker 10 as the second reactor, there is positioned an ejector (not shown) ejecting air at a pressure of about 5 kg/cm². This ejector serves to send the catalyst particle being dropped downwardly in the cracker 10, to an external cyclone 90 communicated with a catalyst regenerator 8. From this external cyclone 90, the catalyst powders formed into a bridge are withdrawn into a storage vessel 91 and removed, whereas the remaining catalyst particles are introduced into the catalyst regenerator 8 at a temperature in the range of about 460 °C to 490 °C.

Into the catalyst regenerator 8, air is introduced at a flow rate of 19.7 kg/min. (which is a rate according to a heat balance) for the case of the above crushing amount) and maintained at about 650 °C, while oxidizing all cokes remained in the catalyst. The circulating amount of the catalyst is determined depending on the heat balance. That is to say, there is no heating other than the initial heating. In the case of the above crushing rate, the circulating amount of the catalyst amount is about 100 to 105 liter/min. Meanwhile, the control of temperature with no dependence on the heat and material balances either can result in a reduction in reactive efficiency in the fluid bed due to an incompletely regenerated catalyst or can result in a collapse phenomenon of the catalyst regenerator 8 due to a high temperature. The catalyst regenerator 8 can be made of Ni-Mo alloy, for example, such as Incolloy 800 HT which is commercially available.

On the lower portion of the catalyst regenerator 8, there is disposed a grid having an obstruction function, and connected to an air distributor. The grid and the air distributor are designed in such a manner that they can supply a pressure sufficient to cope with head of the catalyst regenerator 8. The grid has air holes that can be 1.5 mm in diameter and about 1,800 in number. At a location spaced apart from the upper portion of the catalyst regenerator 8, an external cyclone 90 and an exhaust gas pressure-controlling means 92 are arranged. The exhaust gas pressure-controlling means 92 serves to maintain the pressure in the catalyst regenerator 8 at a pressure level higher than that in the fluid catalytic cracker 10 and in the lower portion (the portion communicated with the cracker 10) of the fractionating column 12, thereby preventing a countercurrent flow from the fractionating column 12 and the catalytic cracker 10.

Thereafter, a fractionating step is carried out. In this fractionating step, a gaseous oil vented from the upper portion of the first reactor 6 and a gaseous oil cracked and isomerized in the fluid catalytic cracker 10, as the second reactor, are subjected to a gas-liquid contact in the fractionating column 12. By this gas-liquid contact, the gaseous oils are separated into a kerosene fraction, a diesel oil fraction, and a gasoline-based fraction. With respect to this fractionating column, a stage number and a tray type are determined for the exact separation efficiency. In the case of the above crushing rate, a column having a diameter of 600 mm, a stage number of 21 and a bubble cap type can be used. The respective discharge lines have a pump and the respective fractions are controlled at an exactly calculated temperature. The kerosene fraction is controlled at temperature of 160 to 200 °C, the diesel oil fraction at 240 to 320 °C, and liquefied oil from the bottom of the fractionating column at 350 to 380 °C. The liquefied oil effluent from the bottom of the fractionating column 12 is returned to the first reactor 6 with a pump 61 while being maintained at a constant level in the fractionating column 12.

The diesel oil fraction and the kerosene fraction effluent from the lower portion and the middle' portion of the fractionating column 12, respectively, are transferred as such with pumps 50 and 58 for a refining step.

Meanwhile, the gasoline-based fraction effluent from the upper portion of the fractionating column 12 will be passed through a reforming step. The gasoline-based oil fraction is recycled in the fractionating column 12 by a reflux ratio, while being stored for the moment in a gasoline-based fraction-recycling tank 13 by a gas-liquid contact manner. Then, the bottom product from the tank 13 is recycled to the fractionating column 12 with a pump 57, and a collected gasoline-based fraction is condensed at 25 °C and stored in a surge tank 14. A low-pressure gas vented from the upper portion of the surge tank 14 is transferred to a low-pressure gas collector (a liquid contactor) 23 to be separated therein.

Meanwhile, the gasoline-based fraction from the surge tank 14 is transferred by a pump 61 to a preheater 15 wherein it is preheated to a temperature of 90 to 120 °C. Then, the preheated fraction is dispersed and stirred by a first super mixer 16 along with a reforming catalyst transferred from a reforming catalyst storage tank 95 through a pump 62, and thus is homogenized. Such homogenized mixture is isomerized, and introduced into a reforming reactor 17, as a third reactor, for example, at a flow rate of 8 to 12 LPM for the case of the above crushing rate.

The reforming catalyst is a super acid catalyst, and preferably HCl, AlCl₃ or SbCl₃, and the gasoline-based fraction is blended with the super acid catalyst in a blending ratio of 1/50 to 1/100 by molar ratio. The super acid catalyst induces a double bond of the gasoline fraction at a temperature of about 90 to 120 °C by a strong acid action, to convert the gasoline fraction to a secondary carbonium and then a tertiary carbonium, thereby leading the gasoline fraction to the isomerization. In this procedure, the conversion significantly depends on the dispersed degree of the catalyst. However, too small particle size of the catalyst is problematic in that it increases a loss factor of the catalyst, and also results in the contamination of a product. As a result, the particle size and the separation time are in a close relation to each other.

As the reforming step is proceeded under a strong acid condition, the third reactor 17 needs to be made of a corrosion resistance material. In the third reactor 17, the catalyst and the reformed gasoline fraction are separated by specific gravity, and the separation time is determined from the calculated sedimentation velocity. The separation time is about 40 minutes for the case of the above crushing rate. The separated and precipitated catalyst is continued to circulate at a rate of 200 to 300 cc/min and periodically replenished in loss fraction.

An acid steam effluent from the third reactor 17, as the reforming reactor, is dissolved in water to be scrubbed, in an acid scrubber 21, and then transferred by a pump 66 to a neutralizing tank 22 wherein it is neutralized.

Meanwhile, the gasoline-based fraction (the reformed fraction) as described above is passed through a cooler 18, and homogeneously mixed with water transferred via a pump 64 at a ratio of about 1:1, in a super mixer 19.

The homogenized mixture is left to stand and subjected to a phase separation in a first refining tank 20. Then, the lower aqueous layer, in which the acid is dissolved, is drained with a pump 68 and transferred into a neutralizing tank 22 and neutralized therein.

Afterwards, a low-pressure gas separation step is carried out. In a low-pressure gas separation column 23, gases vented from the gasoline-based fraction-recycling tank 14 and from the upper portion of the first refining tank 20, and the reformed gasoline fraction transferred by a pump 67 from the oily layer in the first refining tank 20, are subjected to a gas-liquid contact, to be separated into a reformed oil fraction and a gas. The separated gas is transferred to a knock-out tank 24, while the separated reformed oil fraction is transferred to an acid mixer 25 by a pump 69.

Thereafter, the completely reformed oil fraction, as the gasoline-based fraction, and the kerosene and diesel oil fractions separated in the fluid catalytic cracking step are transferred to a first refining step.

The reformed gasoline-based fraction or the fractionated kerosene and diesel oil fractions, respectively, are condensed and mixed with an acid solution (e.g., a 1 to 2 mol% sulfuric acid solution) transferred by a pump 70, in the acid mixer 25. Following this, the mixture is transferred to a second refining tank 26, as a precipitation and separation tank, and then condensed and mixed with an alkaline solution (e.g., a 3 to 5 mol% sodium hydroxide solution) transferred by a pump 71, in an alkali mixer. Next, the mixture is transferred to a third refining tank 28, as a precipitation and separation tank. The used acid solution is disposed of after neutralizing, and the used condensed alkaline solution is reused after being purified. The second and third refining tanks 26 and 28 are designed in such a manner that they can separate a three-phase system to remove acid or alkaline condensate in middle and lower layers present beneath the oil fraction layer, as the upper layer, and having a variety of dissolved additives. For example, a drain valve can be equipped with for the middle layer and the lower layer, respectively.

The kerosene and diesel oil fractions, which were passed through the above refining step, are transferred to the respective storage tank (not shown) and stored as a final product therein. Alternatively, these fractions are stored via an additive-blending step and a second refining step as described below. The stored oil fractions are ready to use as fuel oil, respectively.

Meanwhile, the first refined oil fraction, as the gasoline-based fraction, which was passed through the above refining step, is stored in gasoline-based fraction surge tanks 29 and 30. In the present invention, although the above surge tanks are not specifically limited in their number, the use of the plurality of surge tanks, such as two or more surge tanks, is preferred in view of a process efficiency when considering characteristics of the continuous process.

The first refined oil fraction stored in the gasoline-based fraction surge tanks 29 and 30 is monitored. In this monitoring, the oil fraction is analyzed for its components with a suitable instrumental analysis means, such as gas chromatography. Depending on results of the monitoring, additives for the control of the octane number and the distillation property are blended with the oil fraction in a suitable ratio, thereby obtaining gasoline meeting with provisions under the law.

Tanks, which can be established for the storage of the additives, include an antioxidant storage tank 31, storage tanks 32 and 33 for high-octane number additives, such as a C₄ light, high-octane number additive, and a C₄ heavy, high-octane number additive, etc., a storage tank 34 for low-boiling point and low-octane number additives, such as light, low-octane number linear straight run C₅-C₇ saturated hydrocarbons, and light, low-octane number linear straight run C₅-C₇ n-paraffins, etc., and a storage tank 35 for low-boiling point and high-octane number additives, such as methyl t-butylether, etc.

Depending on the component analysis results of the first refined oil fraction, a desired amount of the first refined oil fraction is transferred to a blender 36 by a pump 77, while desired amount and kind of additives are transferred from the additive tanks 31, 32, 33, 34, and/or 35 to the blender 36 by the respective pumps 72, 73, 74, 75 and/or 76. The transferred additives are blended with the first refined oil fraction in the blender 36, thereby making the oil fraction meeting with provisions under the law.

Then, the blended gasoline from the blender 36 is sent to a second refining step. For the second refining, the blended gasoline is transferred to a fourth refining tank 37 and separated by specific gravity therein. The separated gasoline is filtered through a filter 38, after which the filtered gasoline is passed to an absorber filled with activated carbon in which it is decolorized. Next, the resulting gasoline is stored in a gasoline storage tank 40.

In the method and system for the preparation of gasoline, kerosene, and diesel oil from waste plastics, polyethylene, polypropylene, and polystyrene, etc. in the waste plastics are in principle introduced at a possible constant ratio, because a blending ratio of the polymers has an affect on a quality of products. In this regard, a blending receipt of the polymers is determined depending on analysis results. For reference, such a blend preparation step is also applied in the existing oil refineries, and is an essential process for the preparation of gasoline.

Furthermore, blend stocks mount up to ten in their kind, and are suitably chosen case by case depending on a variety of parameters, such as seasons, and a blending ratio of the fed raw materials, etc. It is particularly important to add the blend stock in such a manner that the distillation property of products meets with the law. Where polystyrene resin is added at a great amount and thus, C₇-C₈ aromatic components are significantly contained, for example, it is preferred to decrease an adding amount of C₉ aromatic component while blending a relatively large amount of C₅ fraction, thereby controlling the octane number.

The gasoline-based fraction, which was passed through the reforming step of the present invention, is about 85 to 90 in average octane number, but this average octane number can be increased to a level of 93 to 96 when the blend stocks are added.

In addition, in the preparing method and system of the present invention, the treatment of 100 parts by weight of waste plastics, as the raw material, produces 39 to 42 part by weight of gasoline-based fraction, 9 to 12 parts of kerosene fraction, 9 to 11 parts by weight of diesel fraction, 7 to 11 parts by weight of waste gas, and 8 to 11 parts by weight of waste components.

Table 1 below illustrate an example of a blend for preparing gasoline using the gasoline-based fraction prepared according to the present invention.

**Table 1**

| Component(Blend stock) | Octane number | Blending ratio | Weight octane number |
|---|---|---|---|
| Reformed | 85-90 | 70% | 59.5 to 63 |
| fraction | | | |
| C₄ component | 94 | 5% | 4.7 |
| C₉ aromatic | 117 | 10% | 11.7 |
| component | | | |
| MTBE | 115 | 15% | 17.25 |
| Total | | | 93.15 to 96.40 |
| MTBE: methyl t-butylether | | | |

As apparent from the above description, the present invention provides the method and system for the continuous preparation of gasoline, kerosene and diesel oil from waste plastics. Such method and system adopts the fluid catalytic cracking manner, in which the first catalytically reacted raw material and the catalyst particles are in contact with each other while moving downwardly, and includes the reforming with the circulating catalyst. Thus, the present invention exhibits a high conversion, while efficiently eliminating problems due to the catalyst poison phenomenon. Moreover, the present invention can commercially apply to a small scale facility, not to apply to a large scale facility. In addition, the present invention allows the gasoline fraction to be produced at a relatively high fraction, and also greatly contributes to waste resource reclamation and environmental protection.

Although the preferred embodiments of the invention have been disclosed for illustrative purposes, those skilled in the art will appreciate that various modifications, additions and substitutions are possible, without departing from the scope of the invention as disclosed in the accompanying claims.

## Claims

1. Method for the continuous preparation of gasoline, kerosene, and diesel oil from waste plastics, comprising the steps of: subjecting a melt of the waste plastics to a first catalytic reaction in which the waste plastic melt is in contact with a nickel or nickel alloy catalyst to be dehydrogenated while being decomposed; subjecting the dehydrogenated and decomposed waste plastic melt to a fluid catalytic cracking, as a second catalytic reaction, in which the waste plastic melt and an alumina silicate solid acid catalyst are introduced downwardly into a fluid catalytic cracker; and fractionating the cracked material into a gasoline-based fraction, a kerosene fraction, and a diesel oil fraction.

2. The method of Claim 1, in which the first catalytic reaction step is carried out at a temperature in the range of 350 °C to 370 °C.

3. The method of Claim 2, in which the flow rate of the waste plastic melt in the first catalytic reaction is controlled in such a manner that a reaction segment for the flow rate is 10 to 20 µm.

4. The method of Claim 1, in which the fluid catalytic cracking step is carried out at a temperature of 500 °C to 550 °C.

5. The method of Claim 4, which further comprises the step of introducing steam into the bottom of the fluid catalytic cracker, after the fluid catalytic cracking step, whereby non-vaporized gaseous oil present on the catalyst particle surface is vaporized.

6. The method of Claim 1, which further comprises the steps of:
collecting the downwardly introduced catalyst particles from the fluid catalytic cracker;
mixing the collected catalyst particles with air; and
bring the resulting mixture into contact with nickel-molybdenum catalyst at a temperature of 620 °C to 680°C, whereby cokes remaining on the catalyst particle are removed by oxidation.

7. The method of Claim 1, which further comprises the step of:
pretreating the waste plastics by crushing and melting the waste plastics before the first catalytic reaction; and
precipitating impurities in the waste plastics.

8. The method of Claim 7, in which the melting step consists of firstly melting the waste plastics to maintain a moisture content thereof at 10% or less, and secondly melting the waste plastics to elevate a temperature thereof to a range of 340 °C to 360 °C, and the impurity-precipitating step is carried out at a temperature of 340 °C to 360 °C.

9. The method of Claim 1, which further comprises the step of reforming the gasoline-based fraction with a super acid catalyst of HCl, AlCl₃, or SbCl₃, as a third reaction step.

10. The method of Claim 9, in which the gasoline-based fraction is blended with the super acid catalyst in a molar ratio of 1/50 to 1/100.

11. The method of Claim 9, which further comprises the steps of:
mixing the reformed gasoline-based fraction and the catalyst from the third catalytic reaction with water;
allowing the resulting mixture to be left to stand; and
draining and neutralizing the aqueous layer of the resulting mixture.

12. The method of Claim 9, which further comprises the steps of: subjecting the reformed gasoline-based fraction to a low-pressure gas separation using a gas-liquid contact manner, after the third catalytic reaction step.

13. The method of Claim 1 or 12, which further comprises the steps of:
mixing the kerosene and diesel oil fractions from the fractionating step, and the reformed gasoline-based fraction from the low-pressure gas separation step, with an acid, respectively;
separating the acid from the respective fractions;
mixing the respective fractions with an alkali; and
separating the alkali from the respective fractions, whereby the respective fractions are refined.

14. The method of Claim 13, which further comprises the steps of:
monitoring the gasoline-based fraction from the refining step by an instrumental analysis; and
adding additives to the gasoline-based fraction according to the instrumental analysis results, whereby the gasoline-based fraction has an octane number and a distillation property meeting with the law.

15. The method of Claim 14, in which the additives are selected from the group consisting of an antioxidant; a C₄ light high octane number additive, and/or a C₄ heavy high octane number additive; a low boiling point and low octane number additive of a C₅ to C₇ saturated hydrocarbon, and/or a low boiling point and low octane number additive of a C₅ to C₇ n-paraffin; a low boiling point and high octane number additive of methyl t-butylether; and a combination thereof.

16. A system for continuously preparing gasoline, kerosene, and diesel oil from waste plastics, which comprises:
a fluid catalytic cracker, in which a melt of the waste plastics and an alumina silicate solid acid catalyst particles are introduced downwardly from the upper portion thereof, and cracked and isomerized, and into which steam is injected through its lower portion to vaporize non-vaporized gaseous oil present on the catalyst surface, the fluid catalytic cracker being communicated with a fractionating column through a pressure controlling means disposed at a position spaced apart from the top thereof;
a cyclone disposed outside of the fluid catalytic cracker and serving to sort only the catalyst particle of a desired size among the catalyst particles dropped to the bottom of the fluid catalytic cracker;
a catalyst regenerator made of nickel-molybdenum including an air injector and an exhaust gas pressure controller, and serving to regenerate the catalyst transferred from the cyclone and to return the regenerated catalyst to the fluid catalytic cracker; and
a reactor in which the waste plastic melt is in contact with an impeller made of a nickel or nickel alloy catalyst to be dehydrogenated while being decomposed, the reactor being communicated with the fluid catalytic cracker and the catalyst regenerator.

17. The system of Claim 16, which further comprises an waste plastic-melting device which is communicated with the reactor, a heater and a precipitating tank for removing impurities in the waste plastics, the heater and the precipitating tank being disposed outside of the waste plastic-melting device.

18. The system of Claim 16, in which the upper portion and the lower portion of the fluid catalytic cracker are communicated with each other, the upper portion of the cracker is communicated with a gasoline-based fraction-recycling tank and a surge tank, the middle portion of the cracker is communicated with a kerosene fraction-refining means, and the lower portion of the cracker is communicated with a diesel oil fraction-refining means.

19. The system of Claim 16, in which the fractionating column is an Aspen-fractionating column having a bubble cap tray type.

20. The system of Claim 18, which further comprises:
a preheater for heating the gasoline-based fraction effluent from the surge tank;
a storage tank for a reforming catalyst of super acid; and
a first super mixer for mixing the gasoline-based fraction from the preheater with the reforming catalyst from the reforming catalyst storage tank.

21. The system of Claim 20, which further comprises:
a reforming reactor to which the mixture from the super mixer is transferred, and which serves to reform the gasoline-based fraction;
a second super mixer serving to mix the reformed gasoline-based fraction with water; and
a first refining tank serving as a phase separator and communicated with the second super mixer.

22. The system of Claim 18 or 21, which further comprises:
a liquid contactor serving to bring the reformed gasoline-based fraction from the first refining tank into a gas-liquid contact to separate a low-pressure gas;
an acid-mixing tank and an acid-separating tank serving to refine the kerosene and diesel oil fractions effluent from the fractionating column and the gasoline-based fraction from the liquid contact scrubber, respectively; and
an alkali-mixing tank and an alkali-separating tank communicated with the acid-separating tank.

23. The system of Claim 22, which further comprises:
at least one blender serving to add a variety of additives to the gasoline-based fraction effluent from the alkali-separating tank, according to an instrumental analysis result for the gasoline-based fraction, in such a manner that the gasoline-based fraction has an octane number and a distillation property meeting with the law, and
at least one additive-blending tank communicated with the blender and serving to store the additives.

24. The system of Claim 23, which further comprises:
a filer serving to filter the gasoline-based fraction to which the additive has been added; and
an activated carbon absorber serving to decolorize the gasoline-based fraction.

## Patentansprüche

1. Verfahren zur kontinuierlichen Herstellung von Benzin, Kerosin und Dieselöl aus Kunststoffabfällen, welches folgende Schritte umfasst: eine Schmelze der Kunststoffabfälle wird einer ersten katalytischen Reaktion unterzogen, bei welcher die Kunststoffabfallschmelze zur Dehydrierung während der Auflösung mit einem Nickel- oder Nickellegierungskatalysator in Kontakt steht; die dehydrierte und aufgelöste Kunststoffabfallschmelze wird einem fluidkatalytischen Krackverfahren als eine zweite katalytische Reaktion unterzogen, bei der die Kunststoffabfallschmelze und ein Tonerdesilikat-Festsäure-Katalysator nach unten in eine fluidkatalytische Krackapparatur gegeben werden; und das gekrackte Material wird in eine Benzin-basierte Fraktion, eine Kerosin-Fraktion und eine Dieselöl-Fraktion fraktioniert.

2. Verfahren nach Anspruch 1, bei dem der erste katalytische Reaktionsschritt bei einer Temperatur in einem Bereich von 350°C bis 370°C ausgeführt wird.

3. Verfahren nach Anspruch 2, bei dem die Durchflussgeschwindigkeit der Kunststoffabfallschmelze in der ersten katalytischen Reaktion in einer solchen Art und Weise gesteuert wird, dass ein Reaktionssegment für die Durchflussgeschwindigkeit 10 bis 20 µm ist.

4. Verfahren nach Anspruch 1, bei dem der fluidkatalytische Krackschritt bei einer Temperatur von 500°C bis 550°C ausgeführt wird.

5. Verfahren nach Anspruch 4, welches ferner den Schritt des Einleitens von Dampf in den Boden der fluidkatalytischen Krackapparatur nach dem fluidkatalytischen Krackschritt umfasst, wodurch nicht verdampftes, auf der Katalysatorpartikeloberfläche befindliches gasförmiges Öl verdampft wird.

6. Verfahren nach Anspruch 1, welches ferner folgende Schritte umfasst:
Sammeln der nach unten eingeführten Katalysatorpartikel aus der fluidkatalytischen Krackapparatur;
Mischen der gesammelten Katalysatorpartikel mit Luft;
und
Inkontaktbringen der entstehenden Mischung mit einem Nickel-Molybdän-Katalysator bei einer Temperatur von 620°C bis 680°C, wodurch auf dem Katalysatorpartikel verbleibende Kokse durch Oxidation entfernt werden.

7. Verfahren nach Anspruch 1, welches ferner folgende Schritte umfasst:
Vorbehandeln der Kunststoffabfälle durch Zerkleinerung und Schmelzen der Kunststoffabfälle vor der ersten katalytischen Reaktion; und
Präzipitieren von Verunreinigungen in dem Kunststoffabfall.

8. Verfahren nach Anspruch 7, bei dem der Schmelzschritt erstens aus dem Schmelzen der Kunststoffabfälle zum Erhalt eines Feuchtigkeitsgehalts davon von 10 % oder weniger, und zweitens dem Schmelzen der Kunststoffabfälle zum Erhöhen einer Temperatur davon auf einen Bereich von 340°C bis 360°C besteht, und der Fremdstoff-Präzipitationsschritt bei einer Temperatur von 340°C bis 360°C ausgeführt wird.

9. Verfahren nach Anspruch 1, welches ferner den Schritt des Umformens der Benzin-basierten Fraktion mit einem Supersäure-Katalysator aus HCl, AlCl₃ oder SbCl₃ als einen dritten Reaktionsschritt umfasst.

10. Verfahren nach Anspruch 9, bei dem die Benzin-basierte Fraktion in einem Molverhältnis von 1/50 bis 1/100 mit dem Supersäure-Katalysator gemischt wird.

11. Verfahren nach Anspruch 9, welches ferner folgende Schritte umfasst:
Mischen der umgeformten Benzin-basierten Fraktion und des Katalysators aus der dritten katalytischen Reaktion mit Wasser;
Stehen lassen der entstehenden Mischung; und
Abgießen und Neutralisieren der wässrigen Schicht der entstehenden Mischung.

12. Verfahren nach Anspruch 9, welches ferner folgende Schritte umfasst: die umgeformte Benzin-basierte Fraktion wird einer Niederdruck-Gasabtrennung unter Anwendung eines Gas-Flüssigkeits-Kontaktes nach dem dritten katalytischen Reaktionsschritt unterzogen.

13. Verfahren nach Anspruch 1 oder 12, welches ferner folgende Schritte umfasst:
Mischen der Kerosin- und Dieselölfraktionen aus dem Fraktionierschritt bzw. der umgeformten Benzin-basierten Fraktion aus dem Niederdruck-Gasabtrennungsschritt mit einer Säure;
Abtrennen der Säure von den entsprechenden Fraktionen;
Mischen der entsprechenden Fraktionen mit einem Alkali;
und
Abtrennen des Alkalis von den entsprechenden Fraktionen, wodurch die entsprechenden Fraktionen raffiniert werden.

14. Verfahren nach Anspruch 13, welches ferner folgende Schritte umfasst:
Überwachen der Benzin-basierten Fraktion aus dem Raffinierungsschritt durch eine instrumentelle Analyse; und
Zugeben von Additiven zu der Benzin-basierten Fraktion gemäß den Ergebnissen der instrumentellen Analyse, wodurch die Benzin-basierte Fraktion eine Oktanzahl und eine Destillationseigenschaft erhält, welche dem Gesetz entspricht.

15. Verfahren nach Anspruch 14, bei dem die Additive ausgewählt werden aus der Gruppe, bestehend aus einem Antioxidationsmittel; einem leichten C₄-Additiv mit hoher Oktanzahl und/oder einem schweren C₄-Additiv mit hoher Oktanzahl; einem Additiv mit niedrigem Siedepunkt und niedriger Oktanzahl aus einem gesättigten C₅ bis C₇-Kohlenwasserstoff und/oder einem Additiv mit niedrigem Siedepunkt und niedriger Oktanzahl aus einem C₅ bis C₇-n-Paraffin; einem Additiv mit niedrigem Siedepunkt und hoher Oktanzahl aus Methyl-t-Butylether; und einer Kombination daraus.

16. System zur kontinuierlichen Herstellung von Benzin, Kerosin und Dieselöl aus Kunststoffabfällen, welches Folgendes umfasst:
eine fluidkatalytische Krackapparatur, in welcher eine Schmelze der Kunststoffabfälle und Tonerdesilikat-Festsäure-Katalysatorpartikel von dem oberen Teil der Krackapparatur nach unten eingeführt und gekrackt und isomerisiert werden, und in welche durch ihren unteren Teil Dampf eingeleitet wird, um nicht verdampftes, auf der Katalysatoroberfläche befindliches gasförmiges Öl zu verdampfen, wobei die fluidkatalytische Krackapparatur mit einer Fraktioniersäule durch ein Drucksteuerungsmittel verbunden ist, welches sich an einer Stelle befindet, welche vom oberen Teil davon beabstandet ist;
einen Zyklon, der außerhalb der fluidkatalytischen Krackapparatur angeordnet ist und dazu dient, unter den zum Boden der fluidkatalytischen Krackapparatur gelangten Katalysatorpartikel nur die Katalysatorpartikel einer gewünschten Größe zu sortieren;
einen Katalysatorregenerator aus Nickel-Molybdän, der einen Luftinjektor und einen Abgasdruck-Controller miteinschließt und welcher dazu dient, den Katalysator, welcher von dem Zyklon transferiert wurde zu regenerieren, und den regenerierten Katalysator in die fluidkatalytische Krackapparatur zurückzuführen; und
einen Reaktor, in dem die Kunststoffabfallschmelze zum Dehydrieren während der Auflösung, mit einem Laufrad aus einem Nickel- oder Nickellegierungskatalysator in Kontakt steht, wobei der Reaktor mit der fluidkatalytischen Krackapparatur und dem Katalysatorregenerator verbunden ist.

17. System nach Anspruch 16, welches ferner eine Kunststoffabfallschmelzvorrichtung umfasst, welche mit dem Reaktor, einem Heizapparat und einem Absetzbecken zum Entfernen von Fremdstoffen in den Kunststoffabfällen verbunden ist, wobei sich der Heizapparat und das Absetzbecken außerhalb der Kunststoffabfallschmelzvorrichtung befinden.

18. System nach Anspruch 16, bei dem der obere Teil und der untere Teil der fluidkatalytischen Krackapparatur miteinander verbunden sind, wobei der obere Teil der Krackapparatur mit einem Recycling-Behälter für die Benzin-basierte Fraktion und einem Ausgleichsbehälter verbunden ist, und der mittlere Teil der Krackapparatur mit einem Raffinierungsmittel für die Kerosinfraktion verbunden ist, und der untere Teil der Krackapparatur mit einem Raffinierungsmittel für die Dieselölfraktion verbunden ist.

19. System nach Anspruch 16, bei dem die Fraktioniersäule eine Aspen-Fraktioniersäule mit einem Glockenboden ist.

20. System nach Anspruch 18, welches ferner Folgendes umfasst:
einen Vorwärmer zum Erhitzen des Abflusses der Benzin-basierten Fraktion aus dem Ausgleichsbehälter;
einen Speicherbehälter für einen Umformkatalysator aus Supersäure; und
einen ersten Supermischer zum Mischen der Benzin-basierten Fraktion aus dem Vorheizer mit dem Umformkatalysator aus dem Umformkatalysator-Speicherbehälter.

21. System nach Anspruch 20, welches ferner Folgendes umfasst:
einen Umformreaktor, in welchen die Mischung aus dem Supermischer übertragen wird, und welcher der Umformung der Benzin-basierten Fraktion dient;
einen zweiten Supermischer, welcher dem Mischen der umgeformten Benzin-basierten Fraktion mit Wasser dient; und
einen ersten Raffinierungsbehälter, welcher als Phasentrenner dient und mit dem zweiten Supermischer verbunden ist.

22. System nach Anspruch 18 oder 21, welches ferner Folgendes umfasst:
einen Flüssigkeitskontaktgeber, welcher dazu dient, die umgeformte Benzin-basierte Fraktion aus dem ersten Raffinierungsbehälter in einen Gas-Flüssigkeits-Kontakt zu bringen, um ein Niederdruckgas abzutrennen;
einen Säuremischungsbehälter und einen Säuretrennungsbehälter, welche dazu dienen, den Abfluss der Kerosin- und der Dieselöl-Fraktionen aus der Fraktioniersäule bzw. die Benzin-basierte Fraktion aus dem Flüssigkeitskontaktwäscher zu raffinieren; und
einen Alkalimischungsbehälter und einen Alkalitrennungsbehälter, welche mit dem Säuretrennungsbehälter verbunden sind.

23. System nach Anspruch 22, welches ferner Folgendes umfasst:
mindestens einen Mischer, welcher dazu dient, mehrere Additive zu dem Abfluss der Benzin-basierten Fraktion aus dem Alkalitrennungsbehälter hinzuzufügen entsprechend dem Ergebnis einer instrumentellen Analyse für die Benzin-basierte Fraktion, und zwar auf eine solche Art und Weise, dass die Benzin-basierte Fraktion eine Oktanzahl und eine Destillationseigenschaft erhält, welche dem Gesetz entspricht, und
mindestens einen Additivmischungsbehälter, welcher mit dem Mischer verbunden ist und der Speicherung der Additive dient.

24. System nach Anspruch 23, welches ferner Folgendes umfasst:
einen Filter, welcher dazu dient, die Benzin-basierte Fraktion, zu der das Additiv hinzugegeben wurde zu filtern; und
einen A-Kohle-Absorber, welcher dazu dient, die Benzin-basierte Fraktion zu entfärben.

## Revendications

1. Procédé permettant de préparer en continu de l'essence, du kérosène et du gazole à partir de déchets plastiques, comprenant les étapes suivantes : soumettre une masse fondue de déchets plastiques à une première réaction catalytique dans laquelle la masse fondue de déchets plastiques est en contact avec un catalyseur en nickel ou en alliage de nickel pour être déshydrogénée pendant qu'elle est décomposée; soumettre la masse fondue de déchets plastiques déshydrogénée et décomposée à un craquage catalytique fluide, en guise de seconde réaction catalytique, dans laquelle la masse fondue de déchets plastiques et un catalyseur acide solide constitué de silicate d'alumine sont introduits vers le bas dans un craqueur catalytique à lit fluide, et fractionner la matière craquée en une fraction à base d'essence, une fraction de kérosène et une fraction de gazole.

2. Procédé selon la revendication 1, dans lequel la première étape de réaction catalytique est effectuée à une température située dans la plage de 350°C à 370°C.

3. Procédé selon la revendication 2, dans lequel le débit de la masse fondue de déchets plastiques dans la première réaction catalytique est régulé de telle sorte qu'un segment de réaction pour le débit est de 10 à 20 µm.

4. Procédé selon la revendication 1, dans lequel l'étape de craquage catalytique fluide est effectuée à une température de 500°C à 550°C.

5. Procédé selon la revendication 4, qui comprend en outre l'étape d'introduire de la vapeur dans le fond du craqueur catalytique à lit fluide, après l'étape de craquage catalytique fluide, de sorte que le pétrole gazeux non évaporé présent sur la surface des particules de catalyseur est évaporé.

6. Procédé selon la revendication 1, qui comprend en outre les étapes suivantes :
collecter les particules de catalyseur introduites vers le bas sortant du craqueur catalytique à lit fluide;
mélanger les particules de catalyseur collectées avec de l'air; et
mettre le mélange résultant en contact avec un catalyseur constitué de nickel-molybdène à une température de 620°C à 680°C, de sorte que les cokes restant sur les particules de catalyseur sont éliminés par oxydation.

7. Procédé selon la revendication 1, qui comprend en outre l'étape suivante :
pré-traiter les déchets plastiques en broyant et en faisant fondre les déchets plastiques avant la première réaction catalytique; et
faire précipiter les impuretés dans les déchets plastiques.

8. Procédé selon la revendication 7, dans lequel l'étape de fusion comprend les étapes suivantes : premièrement, faire fondre les déchets plastiques pour leur conserver une teneur en humidité de 10% ou moins, et deuxièmement, faire fondre les déchets plastiques pour élever leur température jusqu'à une plage de 340°C à 360°C, et l'étape de précipitation des impuretés est effectuée à une température de 340°C à 360°C.

9. Procédé selon la revendication 1, qui comprend en outre l'étape suivante : reformer la fraction à base d'essence avec un catalyseur superacide constitué de HCl, d'AlCl₃ ou de SbCl₃, en guise de troisième étape de réaction.

10. Procédé selon la revendication 9, dans lequel la fraction à base d'essence est mélangée avec le catalyseur superacide dans un rapport molaire de 1/50 à 1/100.

11. Procédé selon la revendication 9, qui comprend en outre les étapes suivantes :
mélanger la fraction à base d'essence reformée et le catalyseur provenant de la troisième réaction catalytique avec de l'eau;
laisser reposer le mélange résultant; et
faire écouler et neutraliser la couche aqueuse du mélange résultant.

12. Procédé selon la revendication 9, qui comprend en outre les étapes suivantes : soumettre la fraction à base d'essence reformée à une séparation de gaz à basse pression à l'aide d'une méthode par contact gaz/liquide, après la troisième étape de réaction catalytique.

13. Procédé selon la revendication 1 ou 12, qui comprend en outre les étapes suivantes :
mélanger respectivement les fractions de kérosène et de gazole provenant de l'étape de fractionnement et la fraction à base d'essence reformée provenant de l'étape de séparation des gaz à basse pression avec un acide;
séparer l'acide des fractions respectives;
mélanger les fractions respectives avec un alcali; et
séparer l'alcali des fractions respectives, de sorte à raffiner les fractions respectives.

14. Procédé selon la revendication 13, qui comprend en outre les étapes suivantes :
contrôler la fraction à base d'essence provenant de l'étape de raffinage à l'aide d'une analyse instrumentale; et
ajouter des additifs à la fraction à base d'essence en fonction des résultats de l'analyse instrumentale, de telle manière que la fraction à base d'essence ait un indice d'octane et une propriété de distillation conformes à la législation.

15. Procédé selon la revendication 14, dans lequel les additifs sont sélectionnés parmi le groupe composé d'un antioxydant; d'un additif C₄ léger à indice d'octane élevé et/ou d'un additif C₄ lourd à indice d'octane élevé; d'un additif à point d'ébullition bas et à indice d'octane bas d'un hydrocarbure saturé C₅ à C₇ et/ou d'un additif à point d'ébullition bas et à indice d'octane bas d'une n-paraffine C₅ à C₇; d'un additif à point d'ébullition bas et à indice d'octane élevé de méthyle t-butyléther; et d'une combinaison de ceux-ci.

16. Système permettant de préparer en continu de l'essence, du kérosène et du gazole à partir de déchets plastiques, qui comprend :
un craqueur catalytique à lit fluide dans lequel une masse fondue de déchets plastiques et des particules d'un catalyseur acide solide constitué de silicate d'alumine sont introduits vers le bas à partir de sa partie supérieure, et craqués et isomérisés, et dans lequel de la vapeur est injectée à travers sa partie inférieure pour évaporer le pétrole gazeux non évaporé présent sur la surface du catalyseur, le craqueur catalytique à lit fluide communiquant avec une colonne de fractionnement par un moyen de contrôle de pression disposé à un emplacement distant de son sommet;
un cyclone disposé à l'extérieur du craqueur catalytique à lit fluide et servant à trier uniquement les particules de catalyseur d'une taille souhaitée parmi les particules de catalyseur tombées au fond du craqueur catalytique à lit fluide;
un régénérateur de catalyseur fait de nickel/molybdène comprenant un injecteur d'air et un régulateur de pression de gaz d'échappement, et servant à régénérer le catalyseur transféré du cyclone et à renvoyer le catalyseur régénéré au craqueur catalytique à lit fluide; et
un réacteur dans lequel la masse en fusion de déchets plastiques est en contact avec une roue mobile faite d'un catalyseur en nickel ou en alliage de nickel pour être déshydrogénée pendant qu'elle est décomposée, le réacteur communiquant avec le craqueur catalytique à lit fluide et le régénérateur de catalyseur.

17. Système selon la revendication 16, qui comprend en outre un dispositif de fusion de déchets plastiques qui communique avec le réacteur, un réchauffeur et une cuve de précipitation pour éliminer les impuretés des déchets plastiques, le réchauffeur et la cuve de précipitation étant disposés à l'extérieur du dispositif de fusion de déchets plastiques.

18. Système selon la revendication 16, dans lequel la partie supérieure et la partie inférieure du craqueur catalytique à lit fluide communiquent l'une avec l'autre, la partie supérieure du craqueur communique avec une cuve de recyclage de fraction à base d'essence et une cuve d'expansion, la partie centrale du craqueur communique avec un moyen de raffinage de la fraction de kérosène, et la partie inférieure du craqueur communique avec un moyen de raffinage de la fraction de gazole.

19. Système selon la revendication 16, dans lequel la colonne de fractionnement est une colonne de fractionnement Aspen ayant un plateau à coupelle.

20. Système selon la revendication 18, qui comprend en outre :
un pré-chauffeur pour chauffer la fraction à base d'essence effluente de la cuve d'expansion;
une cuve de stockage pour un catalyseur de reformage superacide; et
un premier super-mélangeur pour mélanger la fraction à base d'essence provenant du pré-chauffeur avec le catalyseur de reformage provenant de la cuve de stockage de catalyseur de reformage.

21. Système selon la revendication 20, qui comprend en outre :
un réacteur de reformage auquel le mélange provenant du super-mélangeur est transféré, et qui sert à reformer la fraction à base d'essence;
un second super-mélangeur servant à mélanger la fraction à base d'essence reformée avec de l'eau; et
une première cuve de raffinage servant de séparateur de phases et communiquant avec le second super-mélangeur.

22. Système selon la revendication 18 ou 21, qui comprend en outre :
un contacteur liquide servant à mettre la fraction à base d'essence reformée provenant de la première cuve de raffinage en contact gaz/liquide pour séparer un gaz à basse pression;
une cuve de mélange d'acide et une cuve de séparation d'acide servant à raffiner respectivement les fractions de kérosène et de gazole effluentes de la colonne de fractionnement et la fraction à base d'essence provenant de l'épurateur à contact liquide; et
une cuve de mélange d'alcali et une cuve de séparation d'alcali communiquant avec la cuve de séparation d'acide.

23. Système selon la revendication 22, qui comprend en outre :
au moins un mélangeur servant à ajouter divers additifs à la fraction à base d'essence effluente de la cuve de séparation d'alcali, en fonction du résultat de l'analyse instrumentale de la fraction à base d'essence, de telle manière que la fraction à base d'essence ait un indice d'octane et une propriété de distillation conformes à la législation, et
au moins une cuve de mélange d'additifs communiquant avec le mélangeur et servant à stocker les additifs.

24. Système selon la revendication 23, qui comprend en outre :
un filtre servant à filtrer la fraction à base d'essence à laquelle l'additif a été ajouté; et
un absorbeur à charbon actif servant à décolorer la fraction à base d'essence.
